# EUROPÄISCHE PATENTANMELDUNG

(11) **EP 4 521 178 A1**
(43) Veröffentlichungstag der Anmeldung: **12.03.2025**
(21) Anmeldenummer: 24198327.9
(22) Anmeldetag: 04.09.2024
(51) Int. Cl.: G05B 19/408, G05B 19/409, G05B 19/4093

(54) **VERFAHREN ZUM BETREIBEN EINER NUMERISCH GESTEUERTEN WERKZEUGMASCHINE**

(30) Priorität: 04.09.2023 DE 102023123715
(71) Anmelder: DMG MORI Bielefeld GmbH, 33689 Bielefeld (DE)
(72) Erfinder: FRYE, Martin, 59329 Wadersloh (DE); Dr. LITWINSKI, Kai, 30161 Hannover (DE); KOHLMEYER, Gerhard, 34414 Warburg (DE); VOGT, Patrick, 33619 Bielefeld (DE); Dr. BASSETT, Edmond, 30169 Hannover (DE); MINNEKER, Dietmar, 49525 Lengerich (DE)
(74) Vertreter: MERH-IP Matias Erny Reichl Hoffmann Patentanwälte PartG mbB

(57) **Zusammenfassung**

Ein Verfahren zum Betreiben einer numerisch gesteuerten Werkzeugmaschine, um ein Ablaufprogramm zum Bearbeiten eines Werkstücks zu gestalten, erzeugen, zu modifizieren und/oder auszuführen, umfasst die folgenden Schritte: Anzeigen, auf einer graphischen Benutzeroberfläche, einer Projektbibliothek mit einer Vielzahl von Projektvorlagen. Jede Projektvorlage umfasst einen vorkonfigurierten Ablauf von Vorgängen zum Bearbeiten des Werkstücks gemäß dem Ablaufprogramm. Auswählen einer Projektvorlage durch einen Benutzer. Anzeigen, auf der Benutzeroberfläche, einer Parameteranzeige zum Einstellen einer Vielzahl von Prozessparametern für das Ablaufprogramm. Einstellen der Vielzahl von Prozessparametern durch den Benutzer und Speichern der Prozessparameter. Anzeigen, auf der Benutzeroberfläche, eines Ablaufplans mit einer Vielzahl von Vorgängen und einer Reihenfolge der Vielzahl von Vorgängen. Anzeigen, auf der Benutzeroberfläche, einer Operationsbibliothek mit einer Vielzahl von Operationsvorlagen. Auswählen einer Operationsvorlage durch den Benutzer und Platzieren und/oder Umplatzieren der Operationsvorlage an einer gewünschten Position eines Vorgangs im Ablaufplan. Wiederholen des Auswählens und Platzierens und/oder Umplatzierens von Operationsvorlagen bis der Ablaufplan fertiggestellt ist. Erzeugen eines Ablaufprogramms mit entsprechenden Maschinen- und/oder Steuerfunktionen gemäß dem Ablaufplan und den Prozessparametern und Ausgeben des Ablaufprogramms über eine Steuerschnittstelle an eine Steuerung der Werkzeugmaschine.

## Beschreibung

### Gebiet der Erfindung

Die vorliegende Erfindung betrifft ein Verfahren zum Betreiben einer numerisch gesteuerten Werkzeugmaschine, eine Bedienvorrichtung für eine numerisch gesteuerten Werkzeugmaschine, eine Steuervorrichtung für eine numerisch gesteuerten Werkzeugmaschine und eine Werkzeugmaschine. Insbesondere soll es ermöglicht werden, einen Programmablauf zum Bearbeiten eines Werkstücks direkt an der Steuervorrichtung der Werkzeugmaschine zu erstellen, so dass auf eine Softwareanwendung an einem PC verzichtet werden kann.

### Hintergrund der Erfindung

Im Stand der Technik ist es bekannt, eine Werkstückbearbeitung an numerisch gesteuerten Werkzeugmaschinen mittels einer NC-Steuereinrichtung zu steuern, die zumeist an der Werkzeugmaschine integriert ist. Insbesondere steuert die NC-Steuereinrichtung steuerbare Aktoren, z.B. Spindelantriebe, Achsantriebe von Achsen der Werkzeugmaschine und weitere Maschinenfunktionen der Werkzeugmaschine, z.B. auf Basis eines durch ein CAD/CAM-System generierten oder eines Maschinenbedieners programmierten NC-Programms.

In der EP 2 891 020 A1 wurde eine erweiterte Steuerung einer numerisch gesteuerten Werkzeugmaschine vorgeschlagen, bei der übergeordnet zur NC-Steuereinrichtung eine weitere Steuereinrichtung bzw. Bedieneinrichtung vorgesehen ist, die die Bedienung bzw. Steuerung des Bedieners der Werkzeugmaschine gegenüber den Funktionen einer NC-Steuereinrichtung erweitert.

Die europäische Patentanmeldung Nr. EP 3 767 405 A1 offenbart eine Bedienvorrichtung zum Einsatz an einer numerisch gesteuerten Werkzeugmaschine und Systeme, Vorrichtungen und Verfahren zum Bedienen und Steuern einer oder mehrerer numerisch gesteuerter Werkzeugmaschinen in einem Fertigungssystem. Ein Bearbeitungsauftrag zum Bearbeiten eines oder mehrerer Werkstücke an der Werkzeugmaschine wird auf Grundlage einer vom Bediener über eine Benutzerschnittstelle anwählbare Bearbeitungssequenz gesteuert und entsprechende Maschinen- bzw. Steuerfunktionen werden über die Steuerungsschnittstelle an der Steuereinrichtung aufgerufen.

Die deutsche Patentanmeldung Nr. DE 10 2019 215 497 A1 beschreibt ein Verfahren zum Steuern einer numerisch gesteuerten Werkzeugmaschine auf Grundlage von ein NC-Programm aufweisenden Steuerdaten, die an einer Steuervorrichtung der Werkzeugmaschine bereitgestellt werden, und die an der Steuervorrichtung zum Identifizieren einer in den Steuerdaten angegebenen Untergliederung des NC-Programms in mehrere Programmabschnitte analysiert werden. Eine graphische Benutzeroberfläche wird an der Steuervorrichtung auf Grundlage der Programmabschnitte gemäß der der Untergliederung des NC-Programms erzeugt.

Ursprünglich war es zum Teil notwendig, ein Programm zum Bearbeiten eines Werkstücks durch eine numerisch gesteuerte Werkzeugmaschine mittels G-Code zu programmieren. Aufgrund der hohen Komplexität solcher Programme, kann dabei selbst ein Fachmann schnell den Überblick verlieren. Es besteht somit ein Bedürfnis, das Programmieren von Bearbeitungsvorgängen bzw. ganzen Abläufen an der Steuerung einfacher zu gestalten.

### Der Erfindung zugrundeliegende Aufgabe

Ausgehend vom Stand der Technik soll das Programmieren einer Werkzeugmaschine vereinfacht werden. Insbesondere soll das Programmieren effizienter und intuitiver gestaltet werden. Ferner sollen Fehler beim Programmieren vermieden werden, indem z.B. Logiktests bzw. Plausibilitätstests schon während dem Konfigurieren eines Programmablaufs durchgeführt werden.

### Erfindungsgemäße Lösung

Gemäß einem ersten Aspekt der vorliegenden Erfindung wird ein Verfahren zum Betreiben einer numerisch gesteuerten Werkzeugmaschine nach Anspruch 1 bereitgestellt. Ein zweiter Aspekt der vorliegenden Erfindung betrifft eine Bedienvorrichtung für eine numerisch gesteuerten Werkzeugmaschine nach Anspruch 18. Ein dritter Aspekt der Erfindung betrifft eine Steuervorrichtung nach Anspruch 20 und ein vierter Aspekt betrifft eine Werkzeugmaschine nach Anspruch 21. Weitere Aspekte der vorliegenden Erfindung sind Gegenstand der abhängigen Ansprüche, der Zeichnungen und der folgenden Beschreibung von Ausführungsbeispielen.

Das erfindungsgemäße Verfahren erlaubt es einem Benutzer auf besonders intuitive Weise, Ablaufprogramme für numerisch gesteuerte Werkzeugmaschinen zum Bearbeiten eines Werkstücks direkt mittels entsprechender Eingabeeinrichtungen an der Maschinensteuerung zu erzeugen. Hierzu wird dem Benutzer eine graphische Benutzeroberfläche als Mensch-Maschine-Schnittstelle zum Eingeben von Eingabeinformationen durch den Benutzer und Ausgeben von Ausgabeinformationen an den Benutzer bereitgestellt.

Die graphische Benutzeroberfläche kann insbesondere auf einem Berührungsbildschirm der Maschinensteuerung dargestellt werden, der vorzugsweise eine Gestensteuerung ermöglicht. Über die graphische Benutzeroberfläche kann dem Benutzer der Programmablauf visuell dargestellt werden, so dass der Ablauf einfach und intuitiv zu erstellen, verstehen und einfach zu bearbeiten ist. Ferner können Parameter durch Bilder oder Animationen visuell illustriert werden, um auch diesen Aspekt der Bearbeitung besonders intuitiv zu gestalten. Weiter vorzugweise soll die Bedienung der graphischen Benutzeroberfläche besonders einfach und intuitiv erfolgen. Weiter vorzugsweise kann in einer Detailansicht ein konkreter Ablauf einer Projektvorlage dargestellt werden.

Eine Projektvorlage ist ein beispielsweise ein NC-Programm mit einem vorkonfigurierten Ablauf für die Fertigung eines Bauteils bzw. die Bearbeitung eines Werkstücks ohne den bauteilspezifischen bzw. werkstückspezifischen Programminhalt, der dann vom Benutzer selbst ergänzt werden kann.

Weiter vorzugsweise kann die graphische Benutzeroberfläche als Teil eine App ausgeführt werden, insbesondere als CELOS App oder als PC-Software, die über einen Desktopcomputer oder als Cloud-basierte Anwendung verwendet werden kann, um für eine oder eine Vielzahl von Werkzeugmaschinen Programme zu erstellen. Besonders vorzugsweise kann die App sogar auf einem Smartphone oder Tabletcomputer ausgeführt werden.

In einem Verfahrensschritt wird auf der Benutzeroberfläche eine Projektbibliothek mit einer Vielzahl von Projektvorlagen angezeigt. Jede Projektvorlage umfasst einen vorkonfigurierten Ablauf von Vorgängen zum Bearbeiten des Werkstücks gemäß dem Ablaufprogramm. Projektvorlagen können vorzugsweise auch vom Benutzer erstellt, verändert und gespeichert werden.

Wenn der Benutzer beispielsweise eine Projektvorlage auswählt, kann auf der Benutzeroberfläche eine Parameteranzeige zum Einstellen einer Vielzahl von Prozessparametern für das Ablaufprogramm dargestellt werden. Diese Vielzahl von Prozessparametern kann durch den Benutzer auf der graphischen Benutzeroberfläche bearbeitet werden. Anschließend können die Prozessparameter gespeichert werden. Die Parameteranzeige kann insbesondere zusammen mit einer erklärenden Illustration visuell dargestellt werden.

In einem Editorfenster der Benutzeroberfläche wird ein Ablaufplan mit einer Vielzahl von Vorgängen und einer Reihenfolge der Vielzahl von Vorgängen dargestellt, beispielsweise als Tabelle mit einer Vielzahl von Spalten und Zeilen. Die einzelnen Zellen der Tabelle können jeweils einen Einzelvorgang (ein Arbeitsschritt oder ein Bearbeitungsschritt) darstellen. Die Zeilen werden beispielsweise nacheinander in der dargestellten Reihenfolge von oben nach unten ausgeführt. Zellen in einer gleichen Zeile aber verschiedenen Spalten können z.B. gleichzeitig ausgeführte Schritte darstellen.

Ein Einzelvorgang bzw. eine Operation kann insbesondere ein einzelner Arbeitsschritt sein, der z.B. beschreibt, wie eine Lünette bewegt werden soll. Mit anderen Worten, einzelne Operationen können insbesondere einzelne Bewegungen von Aktoren der Werkzeugmaschine definieren. Ein ganzer Ablaufplan kann eine Bearbeitung eines Werkstücks, z.B. eine spanende Bearbeitung beschreiben.

Ferner wird auf der Benutzeroberfläche eine Operationsbibliothek mit einer Vielzahl von Operationsvorlagen dargestellt. Eine Operationsvorlage entspricht einem Einzelvorgang bzw. Arbeitsschritt, der durch Anpassen von Parametern an die gewünschte Bearbeitung des Werkstücks angepasst werden kann. Als Parameter von Operationen kann beispielsweise ein Verfahrweg, eine Vielzahl von Koordinaten, eine Drehgeschwindigkeit einer Spindel, ein verwendetes Werkzeug usw. eingestellt werden.

Der Benutzer kann das Ablaufprogramm erzeugen, indem er Operationsvorlagen auswählt und an einer gewünschten Position (Zelle) im Ablaufplan platziert. Außerdem kann der

Benutzer bereits platzierte Operationsvorlagen im Ablaufplan Umplatzieren. Dieses Auswählen und Platzieren bzw. Umplatzieren kann beispielsweise durch eine "drag and drop"-Operation durchgeführt werde. Anschließend können die Parameter der Operationsvorlagen angepasst werden. Das Anpassen der Parameter kann vorzugweise auch automatisch erfolgen, wenn die Parameter bereits in einem anderen Schritt eingestellt wurden.

Durch wiederholtes Auswählen und Platzieren und/oder Umplatzieren von Operationsvorlagen kann der Ablaufplan fertiggestellt werden. Anschließend wird ein Ablaufprogramm mit entsprechenden Maschinen- und/oder Steuerfunktionen gemäß dem Ablaufplan und den Prozessparametern erzeugt und ausgegeben, beispielsweise über eine Steuerschnittstelle an eine Steuerung der Werkzeugmaschine. Insbesondere kann ein Programm in G-Code anhand des erstellten Ablaufplans kompiliert. Besonders vorzugsweise kann in einem weiteren Fenster der entsprechende G-Code bzw. NC-Code dargestellt und bearbeitet werden. Das Bearbeiten des Codes kann vorzugsweise auch in den visuellen Ablaufplan zurück übertragen werden. Mit anderen Worten, der Inhalt eines Ablaufprogramms oder einer Operation kann vorzugsweise bidirektional zwischen der visuellen Darstellung und der NC-Steuerung synchronisiert werden. Dabei können vorzugsweise alle vorgenommenen Änderungen hervorgehoben und entstehende Konflikte angezeigt werden.

Eine Bedienvorrichtung umfasst eine Verarbeitungseinrichtung zum Ausführen von Steuer- und Bedienanwendungen, eine Steuerschnittstelle zum Verbinden der Verarbeitungseinrichtung mit einer Steuereinrichtung der Werkzeugmaschine und eine Benutzerschnittstelle zum Anzeigen einer graphischen Benutzeroberfläche als Mensch-Maschine-Schnittstelle zum Eingeben von Eingabeinformationen durch einen Benutzer und Ausgeben von Ausgabeinformationen an den Benutzer. Erfindungsgemäß ist die Verarbeitungseinrichtung eingerichtet, ein erfindungsgemäßes Verfahren auszuführen.

Eine erfindungsgemäße Steuervorrichtung für eine numerisch gesteuerte Werkzeugmaschine mit einer Steuereinrichtung zum Steuern von Maschinenfunktionen der Werkzeugmaschine umfasst eine mit der Steuereinrichtung verbundenen bzw. verbindbare erfindungsgemäße Bedienvorrichtung.

### Bevorzugte Ausgestaltungen der Erfindung

Vorteilhafte Aus- und Weiterbildungen, welche einzeln oder in Kombination miteinander eingesetzt werden können, sind Gegenstand der abhängigen Ansprüche.

Der visuelle Ablaufplan kann vorzugsweise in G-Code bzw. NC-Code übersetzt und in einem Editor dargestellt werden. Als Editor zum Bearbeiten des Ablaufplans kann insbesondere ein Smart Editor verwendet werden, der Syntax- und Semantikfehler erkennen und hervorheben kann. NC-Befehle können vorzugsweise bei der Eingabe automatisch ergänzt bzw. komplettiert werden. Besonders vorzugsweise kann eine Kl integriert werden, die dem Benutzer dabei hilft, ein Ablaufprogramm zu erzeugen, indem z.B. im Editor NC-Code erzeugt wird, nachdem der Benutzer z.B. über eine Chat-Eingabe einen Prompt geschrieben hat.

Der Editor für NC-Code und/oder der Editor zum Bearbeiten des visuellen Ablaufplans einer mehrkanaligen CNC-Werkzeugmaschine können insbesondere als browserbasierte Anwendung ausgeführt sein, die auf einer Steuerung, einem PC, einem Server oder einem mobilen Endgerät eines Benutzers ausgeführt werden kann. Der Editor dient vorzugsweise zum graphisch gestützten Gestalten, Erstellen und Modifizieren von NC-Programmen unabhängig von der Steuerung der Werkzeugmaschine. Hierbei können insbesondere Multitouch-Gesten verwendet werden.

Vorkonfigurierte und benutzerfreundlich visualisierte Projekt- und Programmvorlagen können ein schnelles, intuitives und einfaches Aufbauen des Ablaufplans ermöglichen. Ein daraus generiertes NC-Programm kann insbesondere parametrisiert und strukturiert aufgebaut sein und vorkonfigurierte Bedienungsbefehle von Peripheriegeräten der Werkzeugmaschine (z.B. Stangenlader und Roboter), Roh- und Fertigteilhandhabung (z.B. Stange vorschieben, Bauteilübergabe, Lünetten-Positionierung Fertigteilentladen, usw.) enthalten.

Besonders vorzugsweise wird ein für eine SIEMENS-Steuerung optimiertes Ablaufprogramm mit der dazugehörigen Programmstruktur als Ergebnis erzeugt. Diese kann in einen NC-Speicher der Steuerung der Werkzeugmaschine geschickt werden und stets mit dem Inhalt des Ablaufplans bidirektional synchronisiert bleiben.

Vorzugsweise werden die Projektvorlagen parametrisiert übernommen. Die Parameter können bevorzugt in einem eigenen Fenster in der graphischen Benutzeroberfläche angepasst bzw. eingestellt und gespeichert werden. Dabei können vorzugsweise erklärende Illustrationen angezeigt werden, welche z.B. die Bedeutung der einzelnen Parameter anhand einer Skizze oder einer Animation (z.B. GIF-Dateien) oder dergleichen darstellen.

Jede Operationsvorlage kann insbesondere ein Teilprogramm sein, das vorkonfigurierte Bearbeitungsvorlagen umfasst, die dem Benutzer z.B. erlauben, einen bauteilspezifischen bzw. werkstückspezifischen Zerspanungsteil zu gestalten. Eine Operationsvorlage umfasst z.B. Grunddefinitionen von Bearbeitungsebenen (z.B. Stirnebene, Mantelebene, usw.). Jedes Teilprogramm kann z.B. ein Abschnitt eines vorprogrammierten NC-Codes umfassen. Operationsvorlagen können vorzugsweise vom Benutzer erstellt oder bearbeitet und abgespeichert werden. Ähnlich wie bei Projektvorlagen kann für jede Operationsvorlage eine erklärende Illustration wie z.B. eine Animation oder eine Zeichnung dargestellt werden, die den Vorgang der Operationsvorlage bildlich erklärt, so dass der Benutzer die Funktion sekundenschnell erfassen kann. Vorzugsweise kann in einer weiteren Ansicht der konkrete Inhalt einer Operationsvorlage bzw. der entsprechende NC-Code oder dergleichen dargestellt werden.

Das Auswählen und Platzieren oder Umplatzieren der Operationsvorlagen und Vorgänge kann besonderes vorzugsweise durch eine Gestensteuerung durchgeführt werden, die z.B. ein Ziehen und Ablegen ("drag and drop") umfassen kann. Hierdurch kann eine besonders einfache und intuitive Bearbeitung durch den Benutzer ermöglicht werden.

Vorzugsweise können die Operationsvorlagen und Vorgänge beim Auswählen und Platzieren und/oder Umplatzieren jeweils dynamisch an die gewünschte Position im Ablaufplan angepasst werden. Dieses dynamische Anpassen kann insbesondere in Abhängigkeit bereits vorhandener Operationsvorlagen und Vorgänge im Ablaufplan erfolgen. Somit kann sichergestellt werden, dass die einzelnen Operationsvorlagen und Vorgänge miteinander kompatibel sind. Die Überprüfung kann beispielsweise mittels einer Plausibilitätsprüfung bzw. einem Logiktest durchgeführt werden. Hierbei wird z.B. überprüft, ob der Vorgang eines ersten Kanals mit einem Vorgang eines weiteren Kanals zu selben Zeit kompatibel ist, oder in welcher Reihenfolge die jeweiligen Vorgänge sinnvoll ausgeführt werden können. Um dies zu ermöglichen, können die jeweiligen Operationsvorlagen NC-Code-Abschnitte oder Prüfsequenzen aufweisen, die mit entsprechenden NC-Code-Abschnitten oder Prüfsequenzen anderer Operationsvorlagen im Ablaufplan verglichen werden können.

Besonders vorzugsweise kann durch Prüfen und Auswerten der einzelnen Vorgänge schon beim Hinzufügen und/oder Verschieben von Operationsvorlagen eine Kollision vermieden werden, indem z.B. vorab geprüfte Verfahrwege verwendet werden. Ferner können die Operationsvorlagen vorab optimiert werden, um die Abläufe besonders effizient und risikoarm bzw. kollisionsfrei zu gestalten.

Die verfügbaren Positionen im Ablaufplan können beim Auswählen und Platzieren und/oder Umplatzieren von Operationsvorlagen oder Vorgängen dynamisch angepasst werden. Beispielsweise können freie Zellen im tabellarischen Ablaufplan bereits beim Auswählen einer Operationsvorlage auf die Kompatibilität überprüft werden. Entsprechend können nur technisch sinnvolle Zellen als verfügbares Ziel des Platzierens dargestellt werden. Versucht der Benutzer eine Operationsvorlage an eine nicht verfügbare oder nicht kompatible Zelle zu platzieren, so kann dies verhindert werden bzw. es kann ein entsprechender Hinweis ausgegeben werden.

Das Ablaufprogramm kann vorzugsweise automatisch gemäß dem Ablaufplan erzeugt werden. Hierzu kann beispielsweise ein geeigneter Compiler verwendet werden, der den graphischen Ablaufplan in einen entsprechenden Maschinencode bzw. NC-Code übersetzt.

Kontrollstrukturen können beim Auswählen und Platzieren von Operationsvorlagen im Ablaufplan automatisch und dynamisch erzeugt und/oder angepasst werden. Kontrollstrukturen können beispielsweise Sprungmarken umfassen.

Die einstellbaren Prozessparameter können insbesondere von der verwendeten Werkzeugmaschine abhängig sein. Besonders vorzugsweise werden die einstellbaren Prozessparameter bildlich darstellt. Durch die bildliche Darstellung kann eine besonders einfache und intuitive Bedienung erleichtert werden.

Vorzugsweise umfassen die Prozessparameter mindestens einen aus der folgenden Liste:
Spannmittelmaße einer Arbeitsspindel;
eine Spannkraft der Arbeitsspindel;
Werkstücknullpunkte;
Werkstückabmessungen.

Abmessungen und Positionen können vorzugsweise in Millimetern oder Zoll angegeben werden. Vorzugsweise kann eine dreidimensionale oder zweidimensionale Illustration angezeigt werden, welche diese Abmessungen und Positionen erklärend darstellt.

Der Ablaufplan umfasst eine graphische und interaktive Darstellung, die für jeden Vorgang eine Zeile und für jeden Werkzeugträger (Kanal) und jeden Werkstückträger (Drehspindel) eine Spalte aufweist. In einer Fräsmaschine kann ein Kanal einem Werkzeugträger (der Frässpindel) entsprechen.

Der Ablaufplan kann für jeden Werkzeugträger und für jeden Werkstückträger jeweils eine Spalte aufweisen. In die Hauptspindel und/oder Gegenspindel kann jeweils ein Werkstück eingespannt werden.

Vorzugsweise kann das Verfahren in der Steuerung der Werkzeugmaschine integriert werden. Besonders vorzugsweise wird das Verfahren durch eine Anwendung auf einer Steuereinrichtung der Werkzeugmaschine ausgeführt. In alternativen Ausführungen kann auch eine Anwendung oder ein Teil der Anwendung auf einem Computer oder in einer Cloud oder auf einem geographisch entfernten Server ausgeführt werden.

Die Vielzahl von Vorgängen kann vorzugsweise mindestens einen aus der folgenden Liste von Schritten umfassen:
einen dem Ablaufplan zugeordnetes Ablaufprogramm annehmen;
ein oder mehrere für das Ablaufprogramm erforderliche Spannmittel an der Werkzeugmaschine rüsten bzw. vorbereiten;
ein oder mehrere für das Ablaufprogramm erforderliche Werkzeuge an der Werkzeugmaschine einrichten;
ein oder mehrere für das Ablaufprogramm erforderliche Werkzeuge an der Werkzeugmaschine laden und/oder vorbereiten;
ein oder mehrere für das Ablaufprogramm erforderliche NC-Codes, NC-Programme und/oder NC-Programmabschnitte laden und/oder programmieren;
ein oder mehrere für das Ablaufprogramm erforderliche NC-Codes, NC-Programme und/oder NC-Programmabschnitte ausführen;
eine Prozessüberwachungsanwendung ausführen;
einen oder mehrere dem Ablaufprogramm zugeordnete Bearbeitungsprozesse dokumentieren;
eine automatisierte Qualitätsprüfung eines oder mehrerer bearbeiteter Werkstücke durchführen;
das Ablaufprogramm abgeben;
automatisches Zusammenstellen von Werkstückpaletten;
automatisiertes Beladen von Werkstückpaletten;
automatisches Umsortieren von Werkstücken auf Werkstückpaletten;
Einstellen einer Spannlage eines Werkstücks;
Wechseln von einer Spannlage auf eine andere Spannlage;
automatisches Vermessen von Werkstücken;
automatisches Beladen eines Werkzeugmagazins der Werkzeugmaschine;
automatisiertes Einrichten von Werkzeugen an der Werkzeugmaschine;
automatisches Umsortieren von Werkzeugen am Werkzeugmagazin; und/oder
Durchführen einer oder mehrerer Reinigungs- Wartungs-, Instandhaltungs- und/oder Serviceanwendungen an der Werkzeugmaschine.

Die Eingabeinformationen können ein Element oder mehrere Elemente aus der folgenden Liste umfassen:
Modelldaten, die ein CAD-Modell eines oder mehrerer Werkstücke, eines oder mehrerer Werkstückteile und/oder eines oder mehrerer Werkzeuge angeben;
NC-Daten, die einen oder mehrere NC-Codes, ein oder mehrere NC-Programme und/oder einen oder mehrere NC-Programmabschnitte angeben;
Auftragsdaten, die einer Werkstückbearbeitung zugeordnete Auftragsdaten angeben;
Werkzeugdaten, die Informationen zu einem oder mehreren zugeordneten Werkzeugen angeben;
Werkzeuglistendaten, die eine Liste eines Ablaufprogramms bzw. einer Werkstückbearbeitung zugeordneten Werkzeugen angeben,
Spannmitteldaten, die Informationen zu einem oder mehreren zugeordneten Spannmitteln angeben; und/oder
Spannmittellistendaten, die eine Liste eines Ablaufprogramms bzw. einer Werkstückbearbeitung zugeordneten Spannmitteln angeben.

Jede Projektvorlage kann vorzugsweise eine Animation und/oder eine Erklärung in Textform und/oder eine bildliche Illustration eines in der Projektvorlage enthaltenen Ablaufs umfasst. Ferner können Sprachausgaben die Vorgänge einer Projektvorlage erläutern. Durch das bildliche Darstellen der Vorgänge kann der Benutzer besonders schnell und einfach verstehen, welche Vorgänge durch die Maschine ausgeführt werden. Die Animation bzw. die Beschreibung kann besonders vorzugsweise auch dynamisch auf geänderte Parameter der Projektvorlage angepasst werden.

Eine bevorzugte Bedienvorrichtung umfasst eine Netzwerkschnittstelle zum Verbinden der Verarbeitungseinrichtung mit einem Server.

### Kurzbeschreibung der Zeichnungen

Weitere vorteilhafte Ausgestaltungen werden nachfolgend anhand eines in den Zeichnungen dargestellten Ausführungsbeispiels, auf welches die Erfindung jedoch nicht beschränkt ist, näher beschrieben. Es zeigen schematisch:
- Figur 1: Fig. 1 illustriert ein graphische Benutzeroberfläche zum Auswählen von Projektvorlagen.
- Figur 2: Fig. 2 zeigt eine Einstellmaske für übergreifende Projektparameter.
- Figur 3: Fig. 3 zeigt eine beispielhafte Ansicht einer Bibliothek mit Operationsvorlagen.
- Figur 4: Fig. 4 illustriert eine beispielhafte Ansicht einer graphischen Benutzeroberfläche zum Erstellen eines Ablaufplans.
- Figur 5: Fig. 5 illustriert einen Smart Editor mit intelligenten Funktionen.
- Figur 6: Fig. 6 zeigt eine beispielhafte Ansicht mit Ablaufplan und G-Code.
- Figur 7: Fig. 7 illustriert einen beispielhaften Ablaufplan.
- Figur 8: Fig. 8 illustriert Parametereinstellungen einer integrierten Handhabung.
- Figur 9: Fig. 9 illustriert eine Operationsvorlage zum Drehen in einer Ebene G18.
- Figur 10: Fig. 10 illustriert eine Operationsvorlage zum Einstechen.
- Figur 11: Fig. 11 illustriert eine Operationsvorlage zum Messen eines Außendurchmessers.
- Figur 12: Fig. 12 zeigt ein Ablaufdiagramm, das ein Ausführungsbeispiel eines erfindungsgemäßen Verfahrens illustriert.
- Figur 13: Fig. 13 illustriert eine schematische Ansicht einer beispielhaften Ausführung einer Werkzeugmaschine mit NC-Steuerung.

### Ausführliche Beschreibung von Ausführungsbeispielen

Bei der nachfolgenden Beschreibung einer bevorzugten Ausführungsform der vorliegenden Erfindung bezeichnen gleiche Bezugszeichen gleiche oder vergleichbare Komponenten.

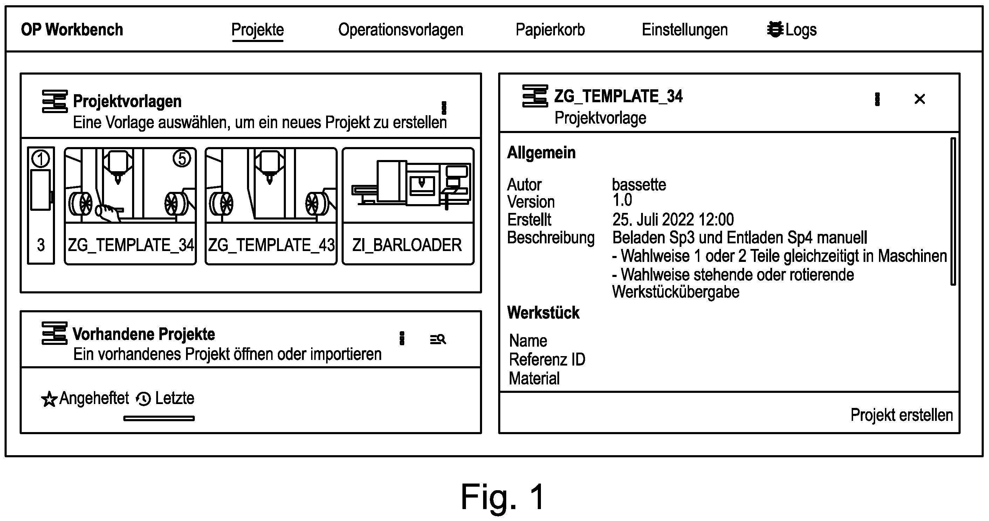

Fig. 1 illustriert ein graphische Benutzeroberfläche zum Auswählen von Projektvorlagen. Diese Ansicht kann beispielsweise ein Startbildschirm als schneller Einstieg zum Erstellen eines Ablaufplans anzeigt werden. Auf der linken Seite ist eine Übersicht von Projektvorlagen gezeigt, die ein Ausschnitt einer Bibliothek mit einer Vielzahl von Projektvorlagen darstellt. Für jede Projektvorlage ist ein erklärendes Bild als visuelle Kurzbeschreibung dargestellt. Wenn der Benutzer z.B. ein solches Übersichtsbild berührt oder einen Mauszeiger darüber platziert, kann z.B. eine kurze Animation des entsprechenden Ablaufs dargestellt werden.

Auf einer rechten Seite des Bildschirms in Fig. 1 werden Details der aktuell ausgewählten Projektvorlage angezeigt. Beispielsweise können ein Autor, eine Version, ein Erstellungsdatum, ein Beschreibungstext usw. angezeigt werden. In einem oberen Bereich des Bildschirms wird eine Menüauswahl angezeigt, die es dem Benutzer erlaubt, zwischen dem Auswahlbildschirm der Projektvorlagen und einem Auswahlbildschirm von Operationsvorlagen, einem Auswahlbildschirm für Einstellungen usw. auszuwählen. Durch Anklicken des Links "Projekt erstellen" kann auf Grundlage der ausgewählten Projektvorlage ein neuer Ablaufplan erstellt werden.

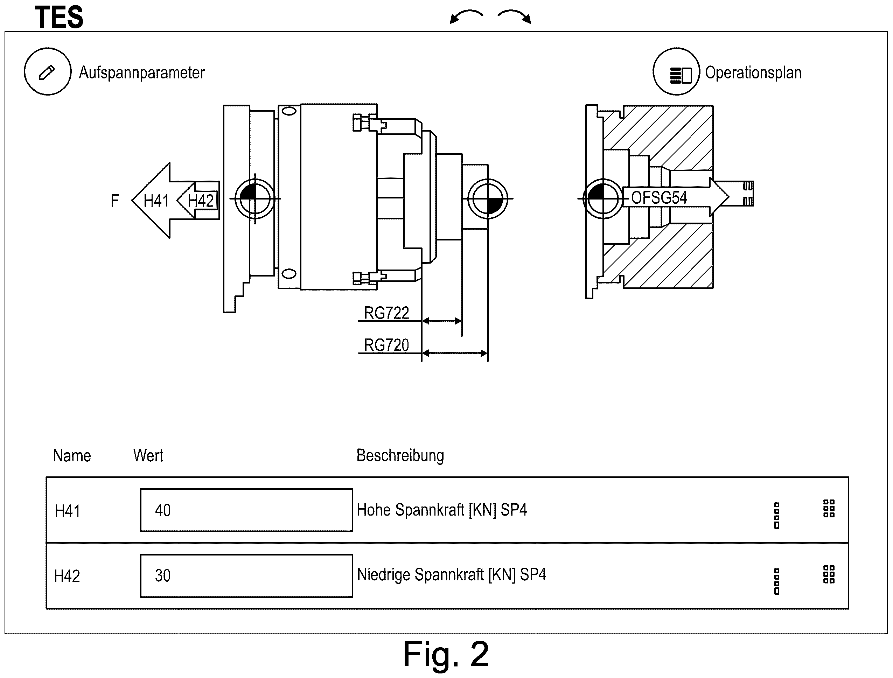

Fig. 2 zeigt eine Einstellmaske für übergreifende Projekt- bzw. Prozessparameter. Diese kann z.B. nach Auswählen einer Projektvorlage dargestellt werden. Im vorliegenden Beispiel können z.B. Aufspannparameter einer Hauptspindel und/oder einer Gegenspindel wie z.B. eine Spannkraft bzw. ein Bereich für die Spannkraft eingestellt werden. Ferner können hier z.B. Spannmittelmaße, Bauteilnullpunkte, Werkstückabmessungen usw. eingestellt und/oder modifiziert werden.

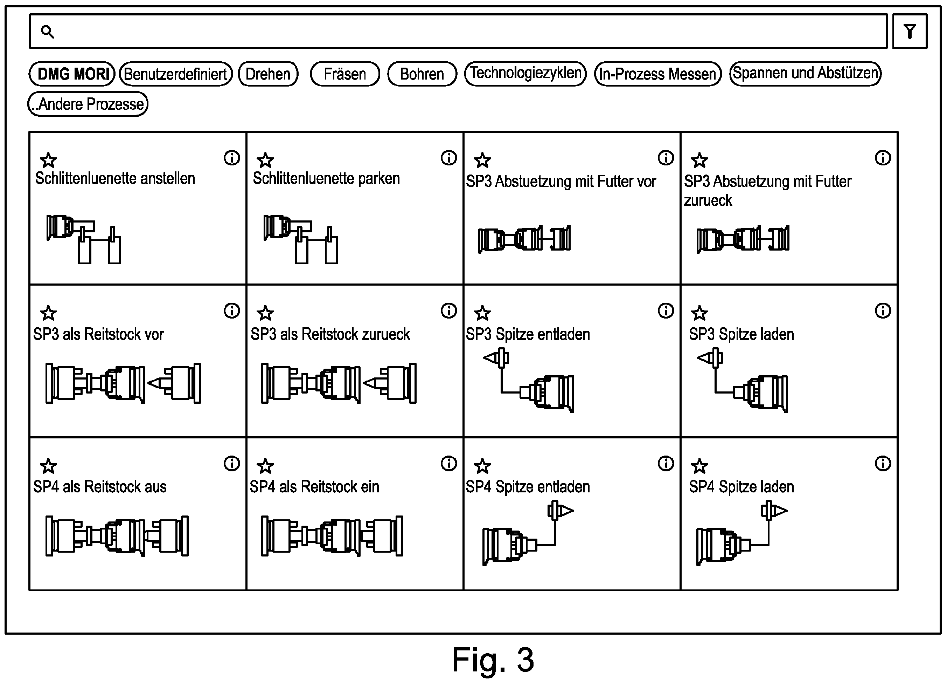

Fig. 3 zeigt eine beispielhafte Ansicht einer Bibliothek mit Operationsvorlagen. Die dargestellten Operationsvorlagen können beispielsweise in Funktionsgruppen wie Drehen, Fräsen, Bohren, Messen, Spannen usw. unterteilt sein. Für jede Operationsvorlage wird ein erklärendes Bild dargestellt, das dem Benutzer erlaubt, die entsprechende Operation besonders schnell zu erkennen und zu verstehen. Durch Ziehen einer Operationsvorlage in den Ablaufplan, kann ein Vorgang definiert werden. Beispielsweise kann der Benutzer eine gewünschte Operationsvorlage an eine Position von Hauptspindel oder Gegenspindel bzw. Kanal 1 oder Kanal 2 im Ablaufplan ziehen. Alle dafür notwendigen Synchronmarken (Wait) oder Fülloperationen können hierbei automatisch erzeugt werden. Diese Synchronmarken (bzw. Sprungmarken) erlauben ein sicheres Abbrechen und einen Widereinstieg ins NC-Programm der Fertigung.

Für jede Operationsvorlage kann eine Detailansicht aufgerufen werden, welche die Operationsvorlage ausführlich beschreibt und zusätzliche Information anzeigen kann.

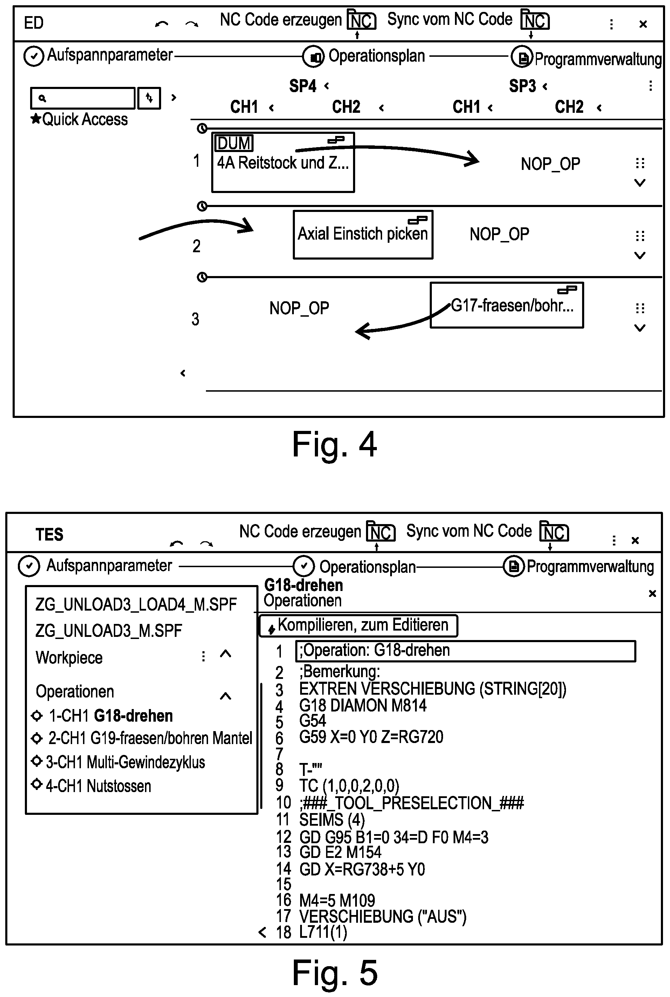

Fig. 4 illustriert eine beispielhafte Ansicht einer graphischen Benutzeroberfläche zum Erstellen eines Ablaufplans für eine Werkzeugmaschine mit einer Hauptspindel SP4 und einer Gegenspindel SP3. Bei zweikanaligen Maschinen werden zusätzlich jede Spindel jeweils zwei Kanäle CH1 und CH2 dargestellt. Der Ablaufplan (in Fig. 4 "Operationsplan") weist hier eine Vielzahl von Zeilen auf, die nacheinander in der Reihenfolge von oben nach unten ausgeführt werden.

Fig. 5 illustriert einen Smart Editor mit intelligenten Funktionen. Der Editor ist Teil der Anwendung zum Erzeugen eines Ablaufprogramms und erlaubt das Bearbeiten von NC-Code bzw. G-Code. Der Editor kann den G-Code strukturiert darstellen und ermöglicht eine einfache Navigation zwischen einzelnen Vorgängen. NC-Befehle können vom Editor verifiziert werden, um Konflikte zu vermeiden. Der dargestellte Code entspricht den Operationen im Ablaufplan und kann automatisch in Abhängigkeit der übrigen Vorgänge angepasst werden. In einer bevorzugten Ausführung kann der Benutzer durch eine Kl unterstützt werden, um den G-Code automatisch zu erzeugen oder zu vervollständigen.

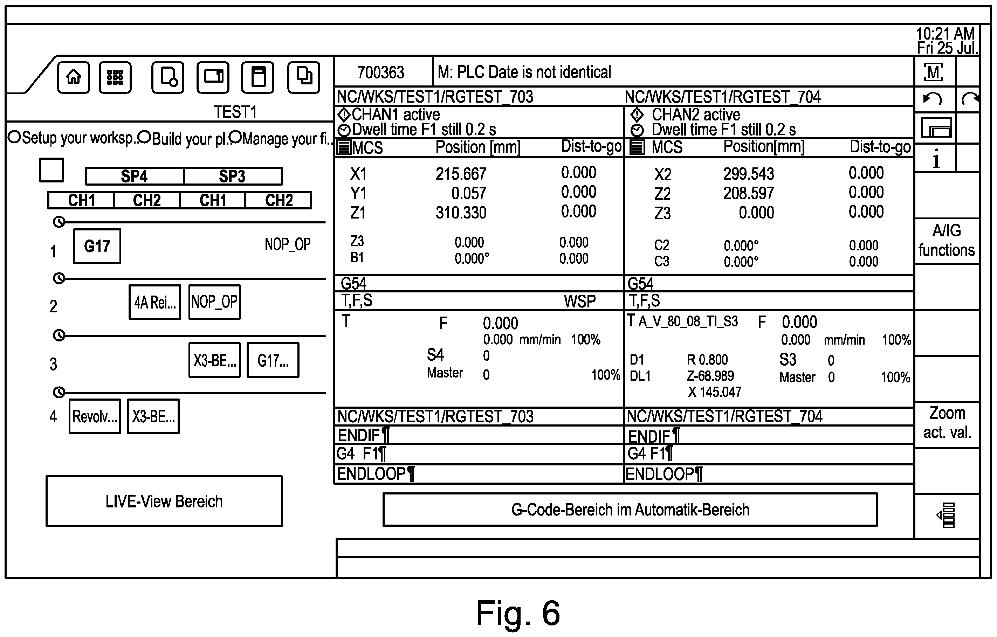

Fig. 6 zeigt eine beispielhafte Ansicht mit Ablaufplan und G-Code. Auf der linken Seite ist ein Bereich gezeigt, wo der Ablaufplan beim Ausführen des erzeugten Ablaufprogramms angezeigt wird. Auf der rechten Seite sind die aktuellen Werte der Steuerung dargestellt.

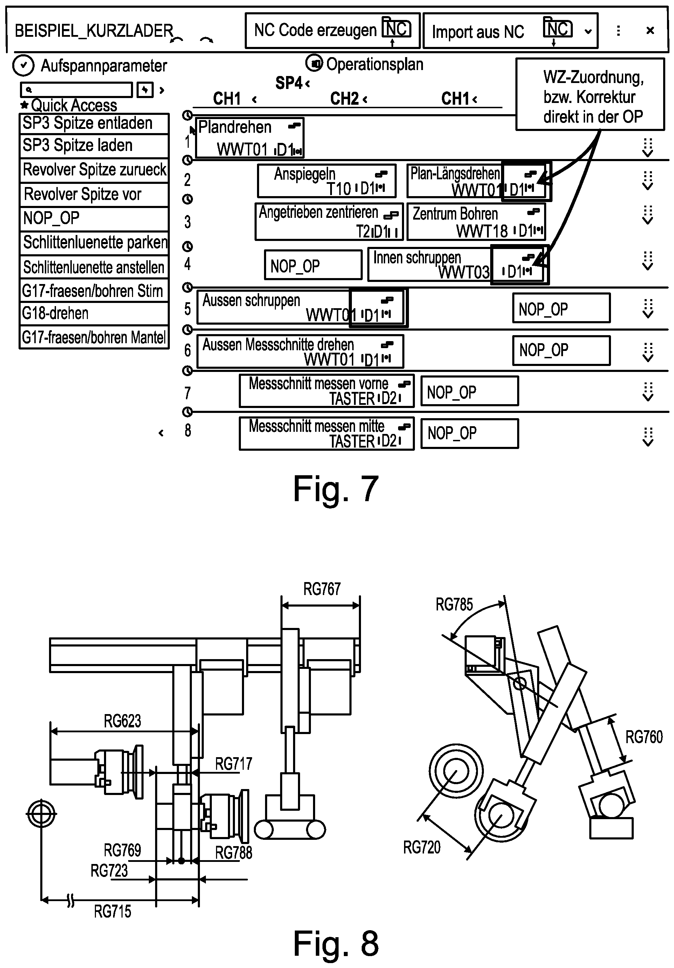

Fig. 7 illustriert einen beispielhaften Ablaufplan. Der Ablaufplan ist hier ein werkstückspezifischer Einsatzplan für alle verwendeten Werkzeuge. Der Ablaufplan zeigt, welche Zerspanungsoperation mit welchem Werkzeug für welches Merkmal am Bauteil zum Einsatz kommt. Durch die vereinfachte Darstellung kann der Benutzer einfach Änderungen und Anpassungen im Ablauf (Position) und Inhalt der jeweiligen Operation vornehmen. Der Benutzer kann einfach auf einen Vorgang tippen und von dort das eingesetzte Werkzeug aufrufen bzw. korrigieren oder Änderungen an Parametern vornehmen.

Jeder Vorgang im Ablaufplan wird im vorliegenden Beispiel als Kachel bzw. Rechteck mit Kurzbeschreibung dargestellt. Zusätzlich sind Icons dargestellt, die weitere Information über das Verwendete Werkzeug oder den Vorgang anzeigen können. Durch Tippen bzw. Klicken auf eine Kachel können weitere Informationen angezeigt bzw. Änderungen vorgenommen werden. Mittels "drag & drop" können die einzelnen Kacheln im Ablaufplan verschoben und neu angeordnet werden.

Fig. 8 zeigt die Parametereinstellungen einer integrierten Handhabung. Die Nutzung einer integrierten Handhabung, in diesem Fall als Abholeinrichtung, erfordert das Eingeben verschiedener Einstellparameter. Diese Parameter sind als RG-Variablen definiert. Die in der Illustration zu sehende, eindeutige Zuordnung der Parameter zu den Variablen ermöglicht dem Nutzer eine sichere Bedienung und intuitive Handhabung der Abholeinrichtung. Fig. 8 zeigt beispielhaft das Entladen des fertigen Werkstücks aus der Gegenspindel (SP3) mittels einer Entladeeinrichtung.

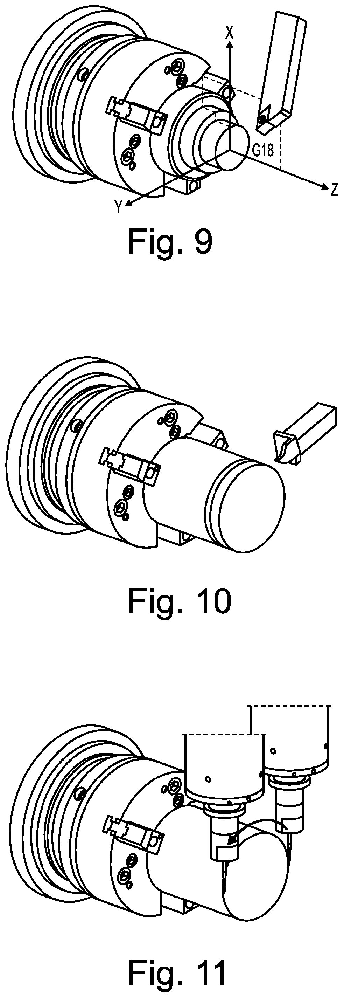

Fig. 9 illustriert eine Operationsvorlage zum Drehen in der Ebene G18. Die Darstellung visualisiert die Drehebene-G18 durch eine markierte Fläche auf der X-Z Ebene des Koordinatensystems am Werkstück. Die Operationsvorlage bietet dem Benutzer eine Programmhülle, welche die grundlegenden technologischen Daten enthält. Diese beinhalten die Anwahl der Bearbeitungsebene, An- und Abfahrbewegungen am Werkstück und die Möglichkeit Schnittwerte, Kühlmittelbefehle und Werkzeuge durch Eingeben in der "Eigenschaften-Maske" der jeweiligen Operationsvorlage in den NC-Code einzubinden. Den werkstückspezifischen Programmcode kann der Benutzer im Anschluss ergänzen.

Fig. 10 illustriert eine Operationsvorlage zum Einstechen. Die dargestellte Illustration verdeutlicht die in der Operationsvorlage spezielle Strategie zum radialen Einstechen. Damit bei langspanenden Werkstoffen ein kontrollierter Spanbruch erzeugt werden kann, ermöglicht die Vorlage das Programmieren des Einstiches in einzelnen

Zustellungssequenzen. Der Arbeits- und Rückzugsvorschub sowie die Verweilzeit am Ende einer Zustellung können durch den Benutzer frei definiert werden. Die Vorlage ist an radialen Außen- und Inneneinstichen anwendbar.

Fig. 11 illustriert eine Operationsvorlage zum Messen eines Außendurchmessers. Die Operationsvorlage enthält eine vollständige Messtrategie für Außendurchmesser inklusive der Möglichkeit ein Werkzeug mit den gemessenen Werten zu korrigieren. Das Messen erfolgt über eine Differenzmessung in negative und positive Richtung der Y-Achse. Der dafür genutzte Zyklus wird über die Parameter aus der Eingabemaske der Operationsvorlage inhaltlich befüllt. Zudem beinhaltet die Vorlage die Erzeugung eines Messprotokolls als Datei auf der Steuerung.

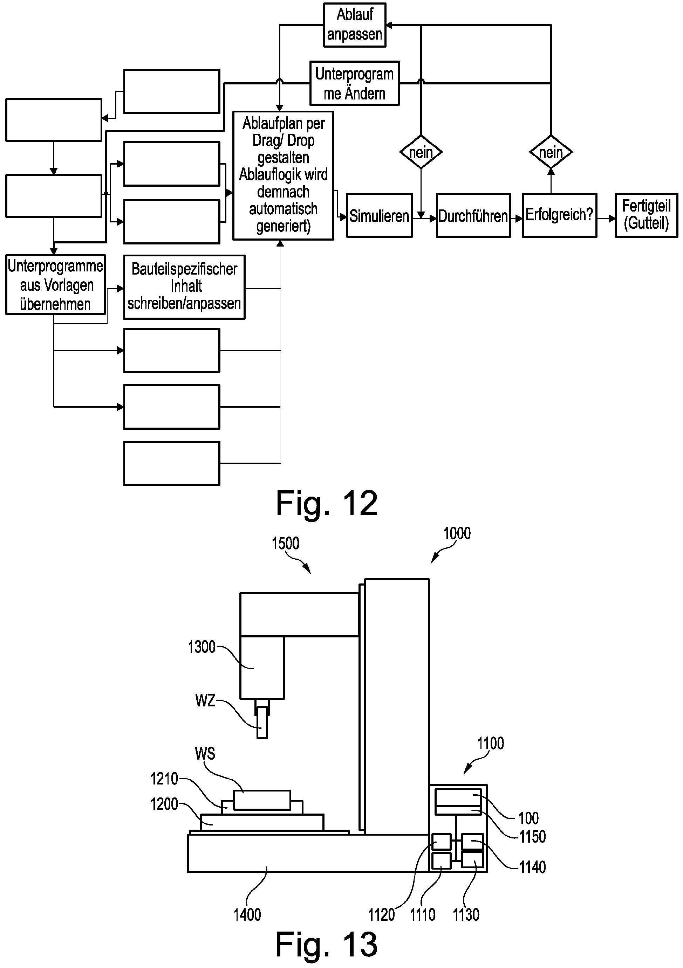

Fig. 12 zeigt ein Ablaufdiagramm, das ein Ausführungsbeispiel eines erfindungsgemäßen Verfahrens zum Erzeugen eines strukturierten NC-Programms (Ablaufprogramm) illustriert. Gegenüber einem üblichen Verfahren nicht mehr benötigte Schritte sind durchgestrichen dargestellt. Durch das erfindungsgemäße Verfahren zum Erzeugen eines Ablaufprogramms entfallen viele Schritte, die zuvor notwendig waren, so dass das vorliegende Verfahren deutlich einfacher ist und Zeit spart.

Das Ablaufprogramm wird erfindungsgemäß mit seiner Ablauflogik automatisch anhand eines Ablaufplans erzeugt, den der Benutzer auf einer graphischen Benutzeroberfläche durch einfache Gestensteuerung anfertigen kann. Die hinterlegten Vorlagen für z.B. Bauteilhandhabung oder Automation sind parametrisch vorbereitet, so dass der Benutzer diese lediglich übernehmen und bei Bedarf leicht anpassen kann. Somit kann das Erzeugen des Ablaufprogramms signifikant vereinfacht werden, wodurch viel Zeit gespart werden kann und potenzielle Fehler vermieden werden können.

Fig. 13 zeigt schematisch eine beispielhafte Ausführungsform einer Werkzeugmaschine 1000 mit entsprechender NC-Steuerung 1100. Die NC-Steuerung 1100 (auch als Steuervorrichtung bezeichnet) weist eine Speichereinrichtung 1130 auf, die dazu eingerichtet ist, Steuerdaten an der NC-Steuerung 1100 der Werkzeugmaschine 1000 bereitzustellen. Die Steuerdaten können beispielsweise von einem externen Computer oder über ein Netzwerk (beispielsweise mit mehreren angeschlossenen Computern), mit dem die NC-Steuerung 1100 verbunden ist (hier nicht gezeigt), an die Speichereinrichtung 1130 übermittelt worden sein. Dies soll allerdings nur beispielhaft sein. Ein gemäß dem erfindungsgemäßen Verfahren erzeugtes Ablaufdiagramm umfasst Steuerdaten zum Steuern der Werkzeugmaschine 1000.

Es gibt natürlich auch noch weitere Möglichkeiten, die Steuerdaten an die Speichereinrichtung 1130 zu übermitteln, beispielsweise indem ein transportabler Datenspeicher mit der Speichereinrichtung 1130 (oder allgemein mit der NC-Steuerung 1100) verbunden wurde und so die Daten an die Speichereinrichtung 1130 übermittelt wurden.

Die NC-Steuerung 1100 weist eine Datenverarbeitungseinrichtung 1140 auf, die dazu eingerichtet sein kann, die Steuerdaten an der NC-Steuerung 1100 zum Identifizieren einer in den Steuerdaten angegebenen Untergliederung des NC-Programms 200 in mehrere Programmabschnitte 210 zu analysieren. Durch die Datenverarbeitungseinrichtung 1140 kann das NC-Programm 200 untergliedert werden, beispielsweise nach darin befindlichen Arbeitsgängen, die die Werkzeugmaschine 1000 an dem zu fertigenden Bauteil/Werkstück WS durchführen würde. Hierfür können beispielsweise entsprechende Befehle als Indikator eines neuen Arbeitsganges identifiziert werden und so entsprechend die Untergliederung des NC-Programmes 200 erfolgen.

Überdies weist die NC-Steuerung 1100 eine Mensch-Maschine-Schnittstelle 1150 auf, die dazu eingerichtet ist, eine durch den Bediener der Werkzeugmaschine 1000 bedienbare graphische Benutzeroberfläche 100 an der NC-Steuerung 1100 auf Grundlage der mehreren Programmabschnitte 210 gemäß der Identifizierung der in den Steuerdaten angegebenen Untergliederung des NC-Programms 200 zu erzeugen und/oder bereitzustellen.

Dabei kann die Mensch-Maschine-Schnittstelle 1150 derart ausgebildet sein, dass eine Bild-/Informationswiedergabe (beispielsweise durch einen Bildschirm) der graphischen Benutzeroberfläche 100 separat von der Steuerung/Befehlseingabe (beispielsweise durch eine Tastatur mit Maus oder vergleichbarem) an der NC-Steuerung 1100 erfolgt, oder aber die Steuerung/Befehlseingabe integriert in der Bild-/Informationswiedergabe der graphischen Benutzeroberfläche 100 erfolgt (beispielsweise als virtuelle Tatstatur und Maus, die durch Berührung durch den Bediener steuerbar in der graphischen Benutzeroberfläche 100 erzeugt werden/ausgebildet sind).

Insbesondere kann die graphische Benutzeroberfläche 100 eine Mehrzahl von Steuerelementen 110 umfassen, wobei jedes Steuerelement 110 einem der Programmabschnitte 210 des NC-Programms 200 zugeordnet ist. Die Steuerelemente 110 können sowohl einzig auf der Bild-/Informationswiedergabe der graphischen Benutzeroberfläche 100 angezeigt werden, oder aber durch Berührung durch den Bediener steuerbar in der graphischen Benutzeroberfläche 100 integriert sein. Insbesondere kann die graphische Benutzeroberfläche 100 einen oben beschriebenen Ablaufplan darstellen.

Hierdurch kann der Bediener das NC-Programm 200 anpassen, beispielsweise, indem zumindest eines der Steuerelemente 110 der graphischen Benutzeroberfläche 100 derart eingerichtet ist, dass der entsprechende zugeordnete Programmabschnitt 210 durch den Bediener aktivierbar bzw. deaktivierbar ist, z.B. indem einzelne Operationen im Ablaufplan hinzugefügt, verschoben oder entfernt werden.

Neben der NC-Steuerung 1100 weist die Werkzeugmaschine 1000, die hier in Fig. 13 beispielhaft in Ständer-Bauweise dargestellt ist, ein Maschinenbett 1400, einen Maschinentisch 1200 mit Werkstückaufspannung 1210 für das Aufspannen des Werkstücks WS, eine Arbeitsspindel 1300 zum Antreiben des Werkzeugs WZ zum Bearbeiten des Werkstücks WS und einen Ständeraufbau 1500 auf.

Zudem kann die Werkzeugmaschine 1000 einen Werkzeugwechsler und/oder einen Werkstückwechsler sowie entsprechend ein Werkzeugmagazin Und/oder Werkstückmagazin aufweisen (jeweils in Fig. 13 nicht gezeigt), so dass für das Bearbeiten entsprechende Befehle und/oder Parameter im NC-Programm 200 für die Steuerung dieser zusätzlichen Vorrichtungen vorgesehen sein können, um beispielsweise die Bearbeitung automatisiert erfolgen lassen zu können. Jedes dieser Elemente kann im Ablaufplan einen eigenen Kanal bzw. eine Spalte aufweisen.

Dies kann ferner dazu führen, dass der entsprechende zugeordnete Programmabschnitt 210 durch den Bediener nur aktivierbar ist, wenn festgestellt wird, dass ein für einen dem Programmabschnitt 210 entsprechenden Bearbeitungsvorgang benötigtes Werkzeug WZ im Werkzeugmagazin der Werkzeugmaschine 1000 bereitgestellt ist. Ist dies nicht der Fall (ist das Werkzeug WZ nicht bereitgestellt), dann wird die NC-Steuerung 1100 den entsprechenden Programmabschnitt 210 in der graphischen Benutzeroberfläche 100 deaktivieren. Mit anderen Worten, der Ablaufplan wird keine entsprechende Spalte aufweisen, bzw. die Zellen der Tabelle des Ablaufplans können entsprechend aktiviert oder deaktiviert sein.

Wie bereits erwähnt, eignet sich das erfindungsgemäße Verfahren und die erfindungsgemäße Steuervorrichtung (NC-Steuerung 200) auch für andere Maschinentypen (Portalmaschinen, Mehrachs-Fräszentren, etc.) und/oder Maschinenarten (beispielsweise Drehmaschinen, Mehrspindel-Drehmaschinen, Erodiermaschinen, Laserauftragschweiß-Maschinen etc.). Die Aufzählung der genannten Beispiele ist nicht als abschließend zu verstehen, sondern kann beispielsweise durch diverse Kombinationen von Maschinenarten/Maschinentypen erweitert werden und soll auch zusätzliche Maschinentypen/Maschinenarten von Werkzeugmaschinen umfassen.

## Patentansprüche

1. Verfahren zum Betreiben einer numerisch gesteuerten Werkzeugmaschine, um ein Ablaufprogramm zum Bearbeiten eines Werkstücks zu gestalten, zu erzeugen, zu modifizieren und/oder auszuführen, wobei das Verfahren die folgenden Schritte umfasst:
Bereitstellen einer graphischen Benutzeroberfläche als Mensch-Maschine-Schnittstelle zum Eingeben von Eingabeinformationen durch einen Benutzer und Ausgeben von Ausgabeinformationen an den Benutzer;
Anzeigen, auf der Benutzeroberfläche, einer Projektbibliothek mit einer Vielzahl von Projektvorlagen, wobei jede Projektvorlage einen vorkonfigurierten Ablauf von Vorgängen zum Bearbeiten des Werkstücks gemäß dem Ablaufprogramm umfasst;
Auswählen einer Projektvorlage durch einen Benutzer;
Anzeigen, auf der Benutzeroberfläche, einer Parameteranzeige zum Einstellen einer Vielzahl von Prozessparametern für das Ablaufprogramm;
Einstellen der Vielzahl von Prozessparametern durch den Benutzer und Speichern der Prozessparameter;
Anzeigen, auf der Benutzeroberfläche, eines Ablaufplans mit einer Vielzahl von Vorgängen und einer Reihenfolge der Vielzahl von Vorgängen;
Anzeigen, auf der Benutzeroberfläche, einer Operationsbibliothek mit einer Vielzahl von Operationsvorlagen;
Auswählen einer Operationsvorlage durch den Benutzer und Platzieren der Operationsvorlage an einer gewünschten Position eines Vorgangs im Ablaufplan; und/oder
Umplatzieren einer Operationsvorlage im Ablaufplan;
Wiederholen des Auswählens und Platzierens und/oder Umplatzierens von Operationsvorlagen bis der Ablaufplan fertiggestellt ist; und
Erzeugen eines Ablaufprogramms mit entsprechenden Maschinen- und/oder Steuerfunktionen gemäß dem Ablaufplan und den Prozessparametern und Ausgeben des Ablaufprogramms über eine Steuerschnittstelle an eine Steuerung der Werkzeugmaschine.

2. Verfahren nach Anspruch 1, wobei:
die Projektvorlagen parametrisiert übernommen werden, und/oder
wobei jede Operationsvorlage ein Teilprogramm ist, das vorkonfigurierte Bearbeitungsvorlagen umfasst.

3. Verfahren nach Anspruch 1 oder 2, wobei:
das Auswählen und Platzieren oder Umplatzieren der Operationsvorlagen und Vorgänge durch eine Gestensteuerung durchgeführt werden; oder
das Auswählen und Platzieren oder Umplatzieren der Operationsvorlagen und Vorgänge durch eine Gestensteuerung durchgeführt werden, wobei die Gestensteuerung ein Ziehen und Ablegen umfasst.

4. Verfahren nach einem der vorstehenden Ansprüche, wobei:
die Operationsvorlagen und Vorgänge beim Auswählen und Platzieren und/oder Umplatzieren jeweils dynamisch an die gewünschte Position im Ablaufplan angepasst werden; und/oder
verfügbare Positionen im Ablaufplan beim Auswählen und Platzieren und/oder Umplatzieren von Operationsvorlagen oder Vorgängen dynamisch angepasst werden.

5. Verfahren nach einem der vorstehenden Ansprüche, wobei:
das Ablaufprogramm automatisch gemäß dem Ablaufplan erzeugt wird; und/oder
Kontrollstrukturen beim Auswählen und Platzieren von Operationsvorlagen im Ablaufplan dynamisch erzeugt und/oder angepasst werden.

6. Verfahren nach einem der vorstehenden Ansprüche, wobei die einstellbaren Prozessparameter:
von der Werkzeugmaschine abhängig sind; und/oder
bildlich darstellt werden; und/oder
mindestens einen der folgenden umfasst:
Spannmittelmaße einer Arbeitsspindel;
eine Spannkraft der Arbeitsspindel;
Werkstücknullpunkte;
Werkstückabmessungen.

7. Verfahren nach einem der vorstehenden Ansprüche, wobei der Ablaufplan eine graphische und interaktive Darstellung ist, die für jeden Vorgang eine Zeile und für jeden Werkzeugträger und jeden Werkstückträger eine Spalte aufweist.

8. Verfahren nach einem der vorstehenden Ansprüche, wobei das Verfahren ausgeführt wird durch:
eine Anwendung auf einer Steuereinrichtung der Werkzeugmaschine, wobei die Steuereinrichtung ein Eingabemedium zum Eingeben von Eingabeinformationen durch einen Benutzer aufweist; oder
eine Anwendung auf einem Computer; oder
eine Anwendung in einer Cloud oder auf einem geographisch entfernten Server.

9. Verfahren nach einem der vorstehenden Ansprüche, wobei die Vielzahl von Vorgängen mindestens einen der folgenden Schritte umfasst:
einen dem Ablaufplan zugeordnetes Ablaufprogramm annehmen;
ein oder mehrere für das Ablaufprogramm erforderliche Spannmittel an der Werkzeugmaschine rüsten bzw. vorbereiten;
ein oder mehrere für das Ablaufprogramm erforderliche Werkzeuge an der Werkzeugmaschine einrichten;
ein oder mehrere für das Ablaufprogramm erforderliche Werkzeuge an der Werkzeugmaschine laden und/oder vorbereiten;
ein oder mehrere für das Ablaufprogramm erforderliche NC-Codes, NC-Programme und/oder NC-Programmabschnitte laden und/oder programmieren;
ein oder mehrere für das Ablaufprogramm erforderliche NC-Codes, NC-Programme und/oder NC-Programmabschnitte ausführen;
eine Prozessüberwachungsanwendung ausführen;
einen oder mehrere dem Ablaufprogramm zugeordnete Bearbeitungsprozesse dokumentieren;
eine automatisierte Qualitätsprüfung eines oder mehrerer bearbeiteter Werkstücke durchführen; und/oder
das Ablaufprogramm abgeben.

10. Verfahren nach Anspruch 9, wobei die Vielzahl von Vorgängen mindestens einen der folgenden Schritte umfasst:
automatisches Zusammenstellen von Werkstückpaletten;
automatisiertes Beladen von Werkstückpaletten;
automatisches Umsortieren von Werkstücken auf Werkstückpaletten;
Einstellen einer Spannlage eines Werkstücks;
Wechseln von einer Spannlage auf eine andere Spannlage;
automatisches Vermessen von Werkstücken;
automatisches Beladen eines Werkzeugmagazins der Werkzeugmaschine;
automatisiertes Einrichten von Werkzeugen an der Werkzeugmaschine;
automatisches Umsortieren von Werkzeugen am Werkzeugmagazin; und/oder
Durchführen einer oder mehrerer Reinigungs- Wartungs-, Instandhaltungs- und/oder Serviceanwendungen an der Werkzeugmaschine.

11. Verfahren einem der vorstehenden Ansprüche, wobei die Eingabeinformationen eines oder mehrere umfassen aus:
Modelldaten, die ein CAD-Modell eines oder mehrerer Werkstücke, eines oder mehrerer Werkstückteile und/oder eines oder mehrerer Werkzeuge angeben;
NC-Daten, die einen oder mehrere NC-Codes, ein oder mehrere NC-Programme und/oder einen oder mehrere NC-Programmabschnitte angeben;
Auftragsdaten, die einer Werkstückbearbeitung zugeordnete Auftragsdaten angeben;
Werkzeugdaten, die Informationen zu einem oder mehreren zugeordneten Werkzeugen angeben;
Werkzeuglistendaten, die eine Liste eines Ablaufprogramms bzw. einer Werkstückbearbeitung zugeordneten Werkzeugen angeben,
Spannmitteldaten, die Informationen zu einem oder mehreren zugeordneten Spannmitteln angeben; und/oder
Spannmittellistendaten, die eine Liste eines Ablaufprogramms bzw. einer Werkstückbearbeitung zugeordneten Spannmitteln angeben.

12. Verfahren einem der vorstehenden Ansprüche, wobei jede Projektvorlage eine Animation und/oder eine Erklärung und/oder eine bildliche Illustration eines in der Projektvorlage enthaltenen Ablaufs umfasst.

13. Bedienvorrichtungfür eine numerisch gesteuerten Werkzeugmaschine, umfassend:
einer Verarbeitungseinrichtung zum Ausführen von Steuer- und Bedienanwendungen;
eine Steuerschnittstelle zum Verbinden der Verarbeitungseinrichtung mit einer Steuereinrichtung der Werkzeugmaschine; und
eine Benutzerschnittstelle zum Anzeigen einer graphischen Benutzeroberfläche als Mensch-Maschine-Schnittstelle zum Eingeben von Eingabeinformationen durch einen Benutzer und Ausgeben von Ausgabeinformationen an den Benutzer, wobei
die Verarbeitungseinrichtung eingerichtet ist, ein Verfahren nach einem Ansprüche 1 bis 12 auszuführen.

14. Steuervorrichtung für eine numerisch gesteuerte Werkzeugmaschine mit einer Steuereinrichtung zum Steuern von Maschinenfunktionen der Werkzeugmaschine und einer mit der Steuereinrichtung verbundenen bzw. verbindbaren Bedienvorrichtung nach einem der Ansprüche 13.

15. Werkzeugmaschine mit einer Steuervorrichtung nach Anspruch 14.
